# EUROPÄISCHE PATENTSCHRIFT

(11) **EP 2 987 592 B1**
(45) Veröffentlichungstag und Bekanntmachung des Hinweises auf die Patenterteilung: **25.03.2020**
(21) Anmeldenummer: 15181061.1
(22) Anmeldetag: 14.08.2015
(51) Int. Cl.: B25J 9/16

(54) **VERFAHREN ZUM PROGRAMMIEREN EINES INDUSTRIEROBOTERS UND ZUGEHÖRIGER INDUSTRIEROBOTER**
METHOD FOR PROGRAMMING AN INDUSTRIAL ROBOT AND ASSOCIATED INDUSTRIAL ROBOT
PROCEDE DE PROGRAMMATION D'UN ROBOT INDUSTRIEL ET ROBOT INDUSTRIEL CORRESPONDANT

(30) Priorität: 20.08.2014 DE 102014216514
(43) Veröffentlichungstag der Anmeldung: 24.02.2016
(73) Patentinhaber: KUKA Deutschland GmbH, 86165 Augsburg (DE)
(72) Erfinder: Zimmermann, Uwe, 86152 Augsburg (DE); Schmirgel, Volker, 86199 Augsburg (DE)
(74) Vertreter: Böss, Dieter Alexander

(56) Entgegenhaltungen:
- WO-A1-2010/088959
- JP-A- 2010 058 202
- US-A- 4 756 662
- US-A1- 2009 105 880
- US-A1- 2014 081 460

## Beschreibung

Die Erfindung betrifft ein Verfahren zum Programmieren eines Industrieroboters, welcher einen Manipulatorarm und eine den Manipulatorarm ansteuernde Steuervorrichtung aufweist, die ausgebildet ist, den Manipulatorarm gemäß eines in einem Programmiermodus editierbaren und in einem Ausführungsmodus ausführbaren Roboterprogramms zu bewegen, das wenigstens einen Programmbefehl enthält, dem wenigstens ein Steifigkeitsparameter zugeordnet ist, durch den die Steuervorrichtung während eines im Ausführungsmodus automatischen Ausführens des Roboterprogramms veranlasst wird, den Manipulatorarm dem wenigstens einen Steifigkeitsparameter entsprechend kraft-und/oder momentengeregelt automatisch anzusteuern.

Die US 2014/0081460 A1 beschreibt ein Verfahren zum Anpassen von Parametern im Rahmen einer Impedanzregelung eines Roboters. Der darin beschriebene Roboter umfasst ein tragbares Roboterbedienhandgerät über das Roboterprogramme durch einen Benutzer oder Programmierer erzeugt und geändert werden können. Im Rahmen dessen ist auch vorgesehen, dass eine natürliche vorhandene Schwingungsfrequenz des Gesamtsystems von Werkzeug und Werkstück, das vom Roboter getragen wird, als eine mathematische Winkelgeschwindigkeit von einem Benutzer über das Roboterbedienhandgerät in die Robotersteuerung übertragen werden kann.

Die US 2009/0105880 A1 beschreibt eine Robotersteuerung, welche eine Objektdatenbank umfasst, in der verschiedene vom Roboterarm zu handhabende Gegenstände und deren physikalische Eigenschaften, wie Gewicht, Abmessungen und Festigkeit hinterlegt sind. Die dortige Robotersteuerung weist auch eine Steuerungseinrichtung auf, welche die Steifigkeit des Roboterarms regelt. Die dortigen Steifigkeiten sind dabei direkt einem Gegenstand aus einer Objektdatenbank zugeordnet.

Aus der EP 1 950 010 B1 ist ein Verfahren zum Programmieren eines Roboters bekannt. Darin ist erwähnt, dass ein allgemein bekanntes Programmierverfahren die sogenannte Teach-In-Programmierung ist, bei der eine Bewegungsinformation für den Roboter durch Anfahren gewünschter Raumpunkte mit Hilfe einer geeigneten Vorrichtung, beispielsweise eines Programmierhandgerätes oder eines Bedienfeldes, und durch Übernahme dieser Raumpunkte in die Robotersteuerung erstellt werden kann. Eine weitere beschriebene Art der Programmierung ist das sogenannte Play-Back Verfahren, bei dem die Programmierung eines Arbeitsvorgangs durch manuelles Führen des Roboters entlang einer gewünschten Raumkurve erfolgt. Dabei werden die Lage-Istwerte, d. h. die Achsstellungen oder die TCP-Position (Tool Center Point Position) des Roboters in einem definierten Zeit- oder Wegraster in das Roboterprogramm übernommen. In einer speziellen Art der Programmierung kann auch die Steifigkeit/Nachgiebigkeit des Roboters während des Vormachens eines Bearbeitungsprozesses erfasst werden.

Aufgabe der Erfindung ist es, ein Verfahren zum Programmieren eines Industrieroboters bereitzustellen, mit dem der Industrieroboter durch manuell geführtes Bewegen des Manipulatorarms auf einfache und genau Weise programmiert werden kann. Insbesondere ist es Aufgabe der Erfindung eine Programmierung der Nachgiebigkeit und/oder der Steifigkeit des Manipulatorarms zu verbessern, insbesondere zu vereinfachen.

Die Aufgabe der Erfindung wird gelöst durch ein Verfahren zum Programmieren eines Industrieroboters, welcher einen Manipulatorarm und eine den Manipulatorarm ansteuernde Steuervorrichtung aufweist, die ausgebildet ist, den Manipulatorarm gemäß eines in einem Programmiermodus editierbaren und in einem Ausführungsmodus ausführbaren Roboterprogramms zu bewegen, das wenigstens einen Programmbefehl enthält, dem wenigstens ein Steifigkeitsparameter und eine Pose des Manipulatorarms zugeordnet ist, durch den die Steuervorrichtung während eines im Ausführungsmodus automatischen Ausführens des Roboterprogramms veranlasst wird, den Manipulatorarm dem wenigstens einen Steifigkeitsparameter entsprechend kraft-und/oder momentengeregelt automatisch anzusteuern, aufweisend die Schritte:
- Auswählen eines Programmbefehls, dessen zugeordneter Steifigkeitsparameter der zugeordneten Pose im Programmiermodus überprüft, geändert und/oder gespeichert werden soll,
- Bewegen des Manipulatorarms in eine von der ausgewählten, zugeordneten Pose unterschiedliche Prüf-Pose, in welcher der Industrieroboter zum manuellen Berühren und/oder Bewegen des Manipulatorarms eingerichtet und/oder angeordnet ist,
- Automatisches Ansteuern des Manipulatorarms durch die Steuervorrichtung derart, dass der Manipulatorarm in der Prüf-Pose die dem zugeordneten Steifigkeitsparameter des ausgewählten Programmbefehls entsprechende Steifigkeit aufweist, die der Manipulatorarm in der dem ausgewählten Programmbefehl zugeordneten Pose hätte.

Manipulatorarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Manipulatorarm mit mehreren über Gelenke verbundene Glieder und programmierbare Robotersteuerungen (Steuervorrichtungen) auf, die während des Betriebs die Bewegungsabläufe des Manipulatorarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt.

Manipulatorarme können beispielsweise ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können. Ein mehrere über Gelenke verbundene Glieder aufweisende Manipulatorarm kann als ein Knickarmroboter mit mehreren seriell nacheinander angeordneten Gliedern und Gelenken konfiguriert sein, insbesondere kann der Manipulatorarm als ein Sechsachs-Knickarmroboter ausgebildet sein.

Manipulatorarme mit zugehörigen Robotersteuerungen, wie Industrieroboter können aber insbesondere auch so genannte Leichtbauroboter sein, die sich zunächst von üblichen Industrierobotern dadurch unterscheiden, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter, wie andere Industrieroboter auch, insbesondere kraft- und/oder momentengeregelt, beispielsweise in einer Nachgiebigkeitsregelung oder Steifigkeitsregelung betrieben werden, statt positionsgeregelt betrieben werden, was beispielsweise ein manuelles Verstellen der Pose des Manipulatorarmes vereinfacht. Außerdem kann dadurch eine sichere Mensch-Maschine-Kooperation erreicht werden, da beispielsweise unbeabsichtigte Kollisionen des Manipulatorarmes mit Personen entweder verhindert oder zumindest derart abgeschwächt werden können, so dass den Personen kein Schaden entsteht. Ein solcher Manipulatorarm bzw. ein solcher Leichtbauroboter kann mehr als sechs Freiheitsgrade aufweisen, so dass insoweit ein überbestimmtes System geschaffen wird, wodurch derselbe Punkt im Raum in gleicher Orientierung in mehreren verschiedenen Posen des Manipulatorarms erreicht werden kann. Der Leichtbauroboter kann auf externe Krafteinwirkungen in geeigneten Weisen reagieren. Zur Kraftmessung können Kraftsensoren verwendet werden, die in allen drei Raumrichtungen Kräfte und Drehmomente messen können. Alternativ oder ergänzend können die externen Kräfte auch ohne spezielle Sensoren, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

Unter einem manuellen Berühren und/oder Bewegen des Manipulatorarms wird insbesondere verstanden, dass die momentanen Gelenksstellungen des Manipulatorarms dadurch verändert werden, dass ein Bediener des Industrieroboters den Manipulatorarm an einem oder mehreren seiner Glieder anfasst und beispielsweise durch Drücken, Ziehen und/oder Drehen des gegriffenen Gliedes oder der gegriffenen Glieder die Pose des Manipulatorarms verändert, d.h. verstellt. In einem grundlegenden Ausführungsbeispiel kann an dem in der kinematischen Kette letzten Glied des Manipulatorarms, d.h. am Handflansch des Manipulatorarms beispielsweise ein Griff befestigt oder zumindest ein Griffabschnitt vorgesehen sein, insbesondere starr befestigt sein, über den eine Führungskraft in die mechanisch Struktur des Manipulatorarms eingeleitet werden kann. Eine solche vom Bediener des Industrieroboters auf den Manipulatorarm aufgebrachte Führungskraft kann beispielsweise durch speziell dazu ausgebildete und eingerichtete Sensoren, insbesondere Kraftsensoren unmittelbar gemessen werden, oder aus Messwerten an bereits vorhandenen Gelenkssensoren, insbesondere Kraft-/Momentsensoren des Manipulatorarms mittelbar errechnet oder indirekt aus Motorströmen der Antriebe des Gelenke des Industrieroboters bestimmt werden. Unter einem manuellen Berühren und/oder Bewegen des Manipulatorarms fällt erfindungsgemäß auch ein bloßes Festhalten des Manipulatorarms im Raum, so dass er seine momentane Pose unverändert beibehält. Insoweit wird unter einem manuellen Berühren und/oder Bewegen des Manipulatorarms generell ein manuelles Handhaben des Manipulatorarms verstanden, dass auch ein solches Festhalten in unveränderter Pose mit umfasst.

Unter einer Pose des Manipulatorarms wird ganz allgemein die Summe aller Gelenkstellungen von Gelenken des Manipulatorarms verstanden, welche die einzelnen Glieder des Manipulatorarms verstellbar verbinden. Im engeren Sinne kann bei einem eindeutig bestimmten System unter Pose beispielsweise auch schon die Position und die Orientierung eines Bezugspunktes, wie beispielsweise eines Werkzeugbezugspunktes (Tool-Center-Points / TCP) des Manipulatorarms verstanden werden. Der Werkzeugbezugspunkt kann beispielsweise durch einen geeigneten Punkt an einem Handflansch des Manipulatorarms gebildet werden, an dem ein Greifer, ein Werkzeug oder eine sonstige Vorrichtung befestigt ist, um diese durch Verstellen der Pose des Manipulatorarms im Raum bewegen zu können. Ganz allgemein kann der Werkzeugbezugspunkt ein virtueller Raumpunkt auch außerhalb des Manipulatorarms sein, der jedoch geometrisch starr mit einem der Glieder des Manipulatorarms, insbesondere dem Handflansch des Manipulatorarms verbunden ist.

Eine erfindungsgemäße Prüf-Pose kann sich dadurch auszeichnen, dass der Manipulatorarm Gelenkwinkelstellungen einnimmt, bei der eine zum manuellen Anfassen vorgesehene und/oder ausgewählte Stelle des Manipulatorarms, beispielsweise ein bestimmtes Glied des Manipulatorarms, besonders günstig und/oder auf sichere Weise für einen Bediener zugänglich ist. In der Prüf-Pose kann der Bediener den Manipulatorarm manuell berühren und/oder bewegen, derart, dass der Bediener die momentan angesteuerte Nachgiebigkeit bzw. Steifigkeit des Manipulatorarms spüren und/oder erfühlen kann.

Ein Roboterprogramm bildet eine Steuerungsvorschrift, auf welche Art und Weise die Steuerungsvorrichtung den Manipulatorarm bzw. dessen Gelenke automatisch ansteuern soll, um die gewünschten Bewegungen und Aktionen des Manipulatorarms automatisch ausführen zu lassen. Ein Roboterprogramm enthält dazu Programmbefehle, welche beispielsweise bestimmte Bewegungsarten darstellen. Ein Programmbefehl kann aber auch nur das Einstellen eines Zustandes oder einer Eigenschaft des Manipulatorarms betreffen. Jedem Programmbefehl kann wenigstens ein Parameter zugeordnet sein. Im Falle eines Positionsbefehls kann der wenigstens eine Parameter beispielsweise durch die X-, Y- und Z-Positionswerte eines Werkzeugbezugspunktes im kartesischen Raum gebildet werden. In anderen Fällen kann der Parameter beispielsweise eine Geschwindigkeit, eine maximale Beschleunigung oder ein Nachgiebigkeitswert bzw. Steifigkeitswert sein, der insoweit eine Eigenschaft des Manipulatorarms darstellt und der Manipulatorarm programmgesteuert diese Eigenschaft, insbesondere auch über mehrere Stützpunkte hinweg, automatisch annehmen kann. Die einem Programmbefehl zugeordneten Nachgiebigkeitswerte bzw. Steifigkeitswerte stellen dem jeweiligen Programmbefehlt zugeordnete Steifigkeitsparameter dar. Wenn im Rahmen der vorliegenden Erfindung nur von Steifigkeiten und/oder von Steifigkeitsparametern gesprochen wird, dann bedeutet dies, dass damit auch die Nachgiebigkeiten und/oder die Nachgiebigkeitsparameter von ihrer Bedeutung her erfasst sind. Die Steifigkeitsparameter repräsentieren insoweit im Rahmen der Erfindung die von der Steuervorrichtung eingeregelte Eigenschaft des Manipulatorarms, die auch "Elastizität", "Weichheit" und/oder "Härte" der Gelenke des Manipulatorarms bezeichnet werden können. Mathematisch betrachtet ist der Nachgiebigkeitsparameter der Kehrwert des Steifigkeitsparameters.

Insbesondere im Ausführungsmodus kann das Ansteuern der Antriebe des Industrieroboters dabei mittels Impedanzregelung oder Admittanzregelung erfolgen. Die Steuervorrichtung kann insoweit eingerichtet sein, die Nachgiebigkeits- oder Steifigkeitsregelung des Manipulators mittels Impedanzregelung oder Admittanzregelung zu erzeugen.

Ein Industrieroboter, insbesondere ein Leichtbauroboter kann durch entsprechende Reglerparametrierung unterschiedliche kartesische bzw. achsspezifische Nachgiebigkeiten bzw. Steifigkeiten aufweisen. Im Nachfolgenden werden beispielhaft kartesische Steifigkeiten betrachtet, jedoch gelten die Aussagen auch für achsspezifische Steifigkeiten. Zudem werden die Begriffe "Steifigkeit" und "Nachgiebigkeit" im Wesentlichen gleichbedeutend benutzt, da mathematisch gesehen die Steifigkeit der Kehrwert der Nachgiebigkeit ist. Neben den Steifigkeiten lassen sich noch die Dämpfungen parametrisieren. Im Folgenden wird auf diese Möglichkeit nicht explizit eingegangen, jedoch werden im Rahmen der Erfindung mit Steifigkeitsparameter gegebenenfalls auch zusätzlich Dämpfungsparameter mit umfasst.

Welche Kräfte ein nachgiebigkeitsgeregelter Roboter an einem Arbeitspunkt ausübt hängt von zwei Größen ab. Einerseits von den programmierten Steifigkeitsparametern und andererseits von dem Abstand zwischen Arbeitspunkt und programmiertem Zielpunkt.

In Roboterprogrammen kann die Steifigkeit in einem gesonderten Befehl gesetzt werden und bleibt solange gültig bis ein neuer Parametersatz der Steifigkeit programmiert wird.

Bei der Programmierung von Aufgaben geht der Programmierer im Regelfall folgendermaßen vor. Er wählt eine seiner Meinung nach geeignete Steifigkeit aus und programmiert einen ebenfalls seiner Meinung nach geeigneten Zielpunkt. Anschließend lässt er den Roboter die Aufgabe ausführen und beobachtet das Ergebnis. Durch Modifikation der Steifigkeit oder des Zielpunktes versucht er nun die Aufgabe so zu optimieren, dass diese erfolgreich gelöst wird. Dazu muss er aus der Beobachtung der ausgeführten Bewegung des Industrieroboters schließen, wie er welchen Parameter ändern muss, um ein zufriedenstellendes Ergebnis der Aufgabenlösung zu erhalten.

Grundsätzliches Problem bei der Programmierung nach Stand der Technik ist es, dass Programmierer hier nur eine visuelle Rückmeldung erhalten. Dies ist insbesondere bei Steifigkeitsparametern problematisch, da man hier im Gegensatz zu sonstigen typischen Parametergrößen nur eine geringe Vorstellung von der Auswirkung der physikalischen Größe hat. Anders ausgedrückt, können die Steifigkeiten und/oder Nachgiebigkeiten nicht gesehen werden, sondern müssten eigentlich durch Anfassen des Manipulators ertastet bzw. gefühlt werden.

Bei Positionen oder Geschwindigkeiten ist es vergleichsweise einfach zu "sehen", dass der Roboter beispielsweise etwas "tiefer" oder "langsamer" fahren muss. Nur aus Beobachtungen zu schließen, dass der Roboter weicher oder härter eingestellt werden muss, ist schon nicht mehr in jedem Fall einsichtig. Dies wird insbesondere durch die gleichzeitige Wirksamkeit von beispielsweise sechs Steifigkeitswerten (in x,y und z Richtung und die jeweilige Rotationssteifigkeiten um x, y und z) noch deutlich erschwert. Hinzu kommt, dass Menschen häufig eine recht gute Vorstellung von physikalischen Größen, wie "2 mm" oder "2m/s" haben, jedoch ist dies bei Steifigkeiten, wie z.B. "10N/mm" oder "3Nm/rad" seltener der Fall.

Prinzipiell ist es von Vorteil wenn, der Programmierer die aktuelle Steifigkeitsparametrisierung durch Anfassen des Manipulators fühlen könnten. Dieses "Fühlen" ist rein theoretisch auch möglich, indem der Programmierer das Programm im entsprechenden Punkt bzw. auf der Bahn anhält, ohne erneutem Programmstart den Manipulator anfasst und die aktuelle Parametrierung erfühlt. Allerdings ist hier zum einen die Zugänglichkeit nicht immer gewährleistet, d.h. es ist nicht immer möglich den Manipulator in der entsprechenden Position anzufassen, des Weiteren ist dies auch sicherheitstechnisch bedenklich, da der Manipulator sich in der Regel in der Nähe von Werkstücken oder anderen Objekten befindet. Zudem kann der Manipulator im Kontakt mit dem Werkstück sein, so dass sich ggf. die Steifigkeiten gar nicht erfühlen lassen, da der Roboter sozusagen zwangsgeführt ist.

Ein weiteres Problem bei der üblichen Art der Programmierung ist, dass die Steifigkeiten nicht automatisch fest einem Punkt zugeordnet sind. So ist es zum Testen eines bestimmten Programmabschnitts oder eines bestimmten Programmbefehls durch Satzanwahl nicht ausreichend lediglich den gewünschten Punkt (z.B. LIN P5) auszuwählen, sondern es ist darüber hinaus erforderlich den entsprechenden weiteren Befehl "SetSteifigkeit" zum Setzen der für den gewünschten Punkt geltenden Steifigkeitsparameter auszuführen.

**Beispiel:**

| | |
|---|---|
| 10 | SetSteifigkeit (10,20,10,0,0,0) |
| 20 | LIN P1 |
| 30 | PTP P2 |
| 40 | LIN P3 |
| 50 | SetSteifigkeit (100,100,100,100,100,100) |
| 60 | LIN P4 |
| 70 | PTP P2 |
| 80 | LIN P5 |
| .... | |

Möchte man in diesem beispielhaften Programmausschnitt die Bewegung LIN P5 in Zeile 80 testen, so würde man herkömmlicherweise die Zeile 70 anwählen, den Roboter zum Punkt P2 fahren lassen und dann die lineare Bewegung LIN P5 ausführen lassen. Bei programmierten Steifigkeiten muss man jedoch zuerst die entsprechende Zeile davor suchen und diese ausführen. In diesem Fall also zuerst Zeile 50: SetSteifigkeit (100,100,100,100,100,100)ausführen und dann mit Zeile 70 fortfahren.

Bei einem solchen, üblichen Vorgehen kann es jedoch leicht zu Fehlern in der Bedienung und Programmierung des Industrieroboters kommen, wenn der Programmierer das Ausführen des Befehls zum Setzen der Steifigkeiten versäumt.

Um dem Programmierer eine bessere Vorstellung der in einem Punkt bzw. auf einer Bahn wirkenden Nachgiebigkeit zu vermitteln, werden die erfindungsgemäßen Verfahren vorgeschlagen, so dass es dem Programmierer ermöglicht ist, die eingestellten Steifigkeiten auf sichere Weise unmittelbar zu fühlen.

Indem der Manipulatorarm in eine Prüf-Pose bewegt wird, in der eine ausgewählte Steifigkeit einer ausgewählten Position oder einer ausgewählten Pose des Manipulatorarms automatisch angesteuert eingestellt wird, kann ein Benutzer bzw. ein Programmierer in der Prüf-Pose diejenige Steifigkeit, die der Manipulatorarm in der ausgewählten Position oder in der ausgewählten Pose hätte, durch Anfassen erspüren. Die Prüf-Pose unterscheidet sich dabei von der ausgewählten Position oder einer ausgewählten Pose des Manipulatorarms. Die Prüf-Pose kann dabei eine sichere Position bzw. sichere Pose des Manipulatorarms sein, in der keine Gefahr für den Benutzer bzw. den Programmierer besteht. Dies kann beispielsweise schon dann der Fall sein, wenn der Manipulatorarm von einem Werkstück und/oder Werkzeug wegbewegt ist. Beispielsweise kann der Manipulatorarm in der Prüf-Pose aus einer sicherheitsumzäumten Arbeitszelle herausbewegt sein, so dass eine außerhalb der abgesicherten Arbeitszelle befindlicher Benutzer bzw. Programmierer den Manipulatorarm anfassen kann, um die Steifigkeit zu erspüren.

In einer ersten alternativen Ausgestaltung der Erfindung kann das Bewegen des Manipulatorarms in die Prüf-Pose, in welcher der Industrieroboter zum manuellen Berühren und/oder Bewegen des Manipulatorarms eingerichtet und/oder angeordnet ist, automatisch oder manuell erfolgt, bevor das Auswählen eines Programmbefehls, dessen zugeordneter Steifigkeitsparameter im Programmiermodus überprüft, geändert und/oder gespeichert werden soll, durchgeführt wird.

In einer zweiten alternativen Ausgestaltung der Erfindung kann das Bewegen des Manipulatorarms in die Prüf-Pose, in welcher der Industrieroboter zum manuellen Berühren und/oder Bewegen des Manipulatorarms eingerichtet und/oder angeordnet ist, automatisch oder manuell erfolgt, nachdem das Auswählen eines Programmbefehls, dessen zugeordneter Steifigkeitsparameter im Programmiermodus überprüft, geändert und/oder gespeichert werden soll, durchgeführt wurde.

Generell kann also das Auswählen eines Programmbefehls, dessen zugeordneter Steifigkeitsparameter im Programmiermodus überprüft, geändert und/oder gespeichert werden soll, vor oder nach dem Bewegen des Manipulatorarms in die Prüf-Pose durchgeführt werden.

Um den zu prüfenden Programmbefehl bzw. dessen zugeordnete Steifigkeit auswählen zu können, kann die Steuervorrichtung oder ein mit der Steuervorrichtung verbundenes Handbediengerät ein erstes Eingabemittel aufweisen und das Auswählen eines Programmbefehls, dessen zugeordneter Steifigkeitsparameter im Programmiermodus überprüft, geändert und/oder gespeichert werden soll durch manuelles Betätigen des ersten Eingabemittels erfolgen.

Hierbei genügt es also lediglich den zu prüfenden Programmbefehl auszuwählen, wobei die zu diesem Programmbefehl zugehörige Steifigkeit automatisch mit ermittelt wird. Für den Benutzer oder den Programmierer entfällt die Notwenigkeit die Steifigkeit manuell heraussuchen oder anwählen zu müssen. So kann das richtige Einstellen der zu prüfenden Steifigkeit nicht vergessen werden und es kann auch irrtümlicher Weise keine falsche Steifigkeit ausgewählt werden.

Um sicherzustellen, dass die jeweils dem Punkt, der Pose und/oder der Bahn zugehörige Steifigkeit auch bei Satzanwahl, d.h. bei Auswählen der gewünschten Roboterprogrammzeile, automatisch eingestellt wird, kann jedem Programmbefehl ein entsprechender Parametersatz für die Steifigkeit zugeordnet werden. Die Robotersteuerung sorgt in diesem Fall automatisch dafür, dass beim Ausführen des Bewegungsbefehls die entsprechend parametrisierten Steifigkeiten gesetzt werden. Dies kann analog zu bekannten Programmierlösungen erfolgen, wie beispielsweise bei einem Setzen bahnbezogener Tool- und Baseframes oder Geschwindigkeiten. Eine beispielhafte Umsetzung wäre auch die Verwendung von Unterprogrammen.

Die Steuervorrichtung oder ein mit der Steuervorrichtung verbundenes Handbediengerät kann ein zweites Eingabemittel aufweisen und das automatische Ansteuern des Manipulatorarms durch die Steuervorrichtung derart, dass der Manipulatorarm in der Prüf-Pose die dem zugeordneten Steifigkeitsparameter des ausgewählten Programmbefehls entsprechende Steifigkeit aufweist, soll in dieser Ausführungsvariante erst dann erfolgen, wenn das zweite Eingabemittel betätigt ist.

Die Steuervorrichtung oder ein mit der Steuervorrichtung verbundenes Handbediengerät kann ein drittes Eingabemittel aufweisen und durch manuelles Betätigen des dritten Eingabemittels der Steifigkeitsparameter des ausgewählten Programmbefehls verändert werden.

Das dritte Eingabemittel kann dabei neben einem Ruhezustand wenigstens zwei Schaltzustände aufweisen, und durch manuelles Aktivieren des ersten Schaltzustands der Steifigkeitsparameter des ausgewählten Programmbefehls erhöht werden und durch manuelles Aktivieren des zweiten Schaltzustands der Steifigkeitsparameter des ausgewählten Programmbefehls verringert werden.

Die Steuervorrichtung oder ein mit der Steuervorrichtung verbundenes Handbediengerät kann ein viertes Eingabemittel aufweisen und durch manuelles Betätigen des vierten Eingabemittels wird dann die ausgewählte, eingestellte und/oder momentan durch die Steuervorrichtung am Manipulatorarm angesteuerte Steifigkeit als neuer Steifigkeitsparameter dem ausgewählten Programmbefehl zugeordnet gespeichert.

Bei den vier Eingabemitteln kann es sich um jeweils vier verschiedene mechanische oder virtuelle Taster, Schalter und/oder Berührflächen handeln. Die vier Eingabemittel können auch in beliebigen Varianten und Anzahlen in einem gemeinsamen Bedienelement, wie beispielsweise einem Joystick oder einer 3D-Maus kombiniert sein.

Im Folgenden wird an Hand einer beispielhaften Ausgestaltung beschrieben, wie dem Programmierer die Programmierung der Steifigkeitsparameter erleichtert werden kann. Hierfür werden zwei Ansätze aufgezeigt, die jede für sich geeignet ist, das Programmieren zu vereinfachen. Die beiden Ansätze können insbesondere in Kombination angewendet werden.

Der erste Ansatz beschreibt eine punktbasierte Steifigkeitsparametrisierung, die gewährleistet dass beim Anwählen und Abfahren einer Bewegung stets die entsprechenden Steifigkeitsparameter ausgewählt sind.

Der zweite Ansatz ermöglicht es dem Programmierer die an einem Punkt gesetzten Steifigkeiten direkt durch Anfassen des Roboters zu fühlen, dadurch bekommt er einen besseren Eindruck der aktuellen Parametrierung als nur durch Beobachten des Systems. Somit kann er sehr schnell überprüfen, ob die gewählte Parametrierung sinnig ist bzw. wie und was geändert werden muss.

In einer weiterführenden Ausgestaltung des erfindungsgemäßen Verfahrens kann der wenigstens eine Steifigkeitsparameter in der Prüf-Pose an einer dem ausgewählten Programmbefehl entsprechenden Bezugsstelle des Manipulatorarms eingestellt werden, an welcher Bezugsstelle des Manipulatorarms die Steuervorrichtung im Ausführungsmodus die Steifigkeit entsprechend des Roboterprogramms am Manipulatorarms einstellen würde.

In einer alternativen Ausgestaltung kann der wenigstens eine Steifigkeitsparameter in der Prüf-Pose an einer vom ausgewählten Programmbefehl abweichenden Bezugsstelle des Manipulatorarms eingestellt werden, insbesondere an eine als Bezugsstelle vorbestimmte Greifstelle an einem der Glieder des Manipulatorarms verlegt werden.

Dem wenigstens einen Steifigkeitsparameter kann in allen geeigneten Ausführungsvarianten ein Bezugskoordinatensystem zugeordnet sein und unter Beibehaltung der Prüf-Pose des Manipulatorarms die Orientierung des Bezugskoordinatensystem geändert werden, insbesondere derart geändert werden, dass das Bezugskoordinatensystem in der Prüf-Pose eine Orientierung einnimmt, welche es bezüglich eines Weltkoordinatensystems auch während der Ausführung des ausgewählten Programmbefehls im Ausführungsmodus einnehmen würde.

In alternativen Ausführungsformen kann dem wenigstens einen Steifigkeitsparameter ein Bezugskoordinatensystem zugeordnet sein und die Prüf-Pose des Manipulatorarms derart automatisch verändert werden, dass die Orientierung des Bezugskoordinatensystem in der geänderten Prüf-Pose der Orientierung entspricht, welche das Bezugskoordinatensystem bezüglich eines Weltkoordinatensystems auch während der Ausführung des ausgewählten Programmbefehls im Ausführungsmodus einnehmen würde.

Generell können schrittweise mehrere Programmbefehle des Roboterprogramms nacheinander gemäß einem Verfahren wie beschrieben behandelt werden, insbesondere bei Betätigen eines Eingabemittels, insbesondere bei Betätigen des vierten Eingabemittels indem durch manuelles Betätigen des vierten Eingabemittels die ausgewählte, eingestellte und/oder momentan durch die Steuervorrichtung am Manipulatorarm angesteuerte Steifigkeit als neuer Steifigkeitsparameter dem ausgewählten Programmbefehl zugeordnet gespeichert wird, von einem ausgewählten Programmbefehl zum nächstfolgenden Programmbefehl im Roboterprogramms gesprungen wird.

Die Aufgabe der Erfindung wird außerdem gelöst durch einen Industrieroboter, aufweisend eine Robotersteuerung, die ausgebildet und/oder eingerichtet ist, ein Roboterprogramm auszuführen, sowie aufweisend einen Manipulatorarm mit wenigstens drei Gelenken, die gemäß des Roboterprogramms automatisiert und/oder in einem Handfahrbetrieb automatisch verstellbar sind, wobei die Robotersteuerung ausgebildet und/oder eingerichtet ist, ein Verfahren wie beschrieben durchzuführen.

Konkrete, repräsentative Ausführungsbeispiele gemäß den erfindungsgemäßen Verfahren betreibbarer Industrieroboter sind in der nachfolgenden Beschreibung unter Bezugnahme auf die beigefügten Figuren näher erläutert. Konkrete Merkmale dieser Ausführungsbeispiele können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine Darstellung eines Industrieroboters in der Bauart eines Leichtbauroboters mit einer schematisch dargestellten Robotersteuerung und einem Manipulatorarm in einer Steifigkeitsregelung,
- Fig. 2: eine schematische Darstellung einer Hand eines Programmierers, des Manipulatorarms gemäß Fig. 1 und eines Werkstücks mit einem beispielhaften Arbeitspunkt P1 auf dem Werkstück,
- Fig. 3: eine schematische Darstellung der Hand des Programmierers, des Manipulatorarms gemäß Fig. 1 und des Werkstücks mit dem beispielhaften Arbeitspunkt P1 auf dem Werkstück, wobei sich der Manipulatorarm in einer erfindungsgemäßen Prüf-Pose befindet,
- Fig. 4: eine schematische Darstellung der Hand des Programmierers, des Manipulatorarms gemäß Fig. 1 und des Werkstücks mit dem beispielhaften Arbeitspunkt P1 auf dem Werkstück, wobei sich der Manipulatorarm in einer erfindungsgemäßen Prüf-Pose befindet und die Hand einen Greifabschnitt des Manipulatorarms umfasst,
- Fig. 5: eine schematische Darstellung des in der Prüf-Pose gegriffenen Manipulatorarms gemäß Fig. 4 bei dem die Bezugsbasis der Steifigkeitsparameter an dem zu greifenden Glied des Manipulatorarms in gleicher relativer Weise ausgerichtet ist, wie am Werkzeugbezugspunkt,
- Fig. 6: eine schematische Darstellung des in der Prüf-Pose gegriffenen Manipulatorarms gemäß Fig. 4 bei dem die Orientierung der Bezugsbasis der Steifigkeitsparameter trotz einer anderen Ausrichtung des zu greifenden Glieds des Manipulatorarms als der Werkzeugflansch im Raum beibehalten wird, und
- Fig. 7: eine schematische Darstellung des in der Prüf-Pose gegriffenen Manipulatorarms gemäß Fig. 4 bei dem das zu greifende Glied des Manipulatorarms entsprechend der Bezugsbasis der Steifigkeitsparameter bzw. entsprechend der Orientierung des Werkzeugflansches ausgerichtet wird.

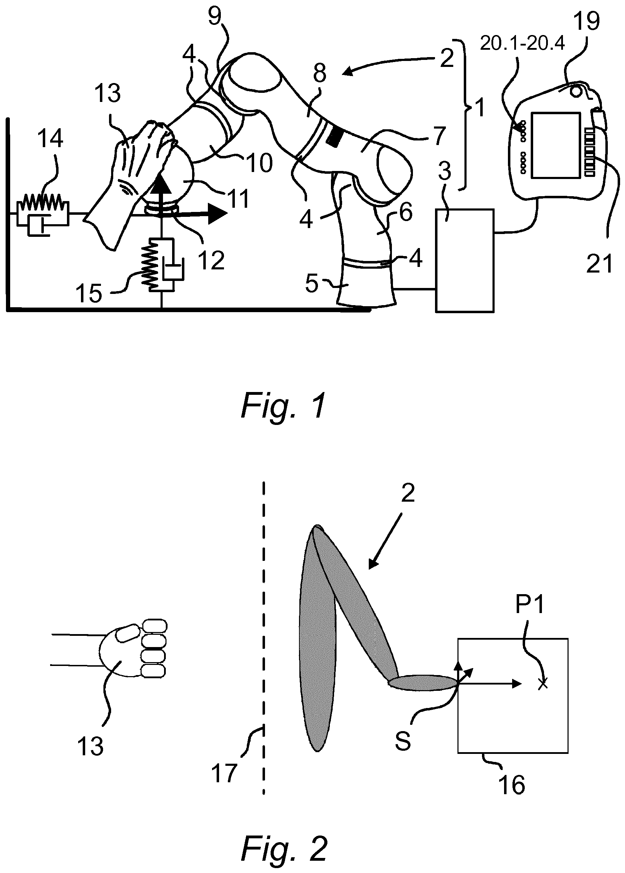

Die Fig. 1 zeigt einen Industrieroboter 1 in einer beispielhaften Ausführung als ein so genannter Leichtbauroboter, der einen Manipulatorarm 2 und eine Robotersteuerung 3 aufweist. Der Manipulatorarm 2 umfasst im Falle des vorliegenden Ausführungsbeispiels mehrere, nacheinander angeordnete und mittels Gelenke 4 drehbar miteinander verbundene Glieder 5 bis 12.

Die Robotersteuerung 3 des Industrieroboters 1 ist ausgebildet bzw. eingerichtet, ein Roboterprogramm auszuführen, durch welches die Gelenke 4 des Manipulatorarms 2 gemäß des Roboterprogramms automatisiert oder in einem Handfahrbetrieb automatisch verstellt bzw. drehbewegt werden können. Dazu ist die Robotersteuerung 3 mit ansteuerbaren elektrischen Antrieben verbunden, die ausgebildet sind, die Gelenke 4 des Industrieroboters 1 zu verstellen.

Die Robotersteuerung 3 ist ausgebildet und/oder eingerichtet, ein Verfahren zum Programmieren des Industrieroboters 1, wie im Folgenden anhand konkreter Ausführungsbeispiele näher beschrieben, durchzuführen.

In einer Steifigkeitsregelung oder Nachgiebigkeitsregelung des Industrieroboters 1 können Kräfte, Momente, Posen und Richtungen in einer dargestellten Prüf-Pose gelernt werden. In einer solchen erfindungsgemäßen Prüf-Pose kann der Manipulatorarm 2 mittel wenigstens einer Hand 13 eines Benutzers manuell berührt und/oder bewegt werden. Der Benutzer kann durch seine Hand die momentane Steifigkeit bzw. Nachgiebigkeit des Manipulatorarms 2 erspüren und dadurch überprüfen. Die vorhandene Steifigkeit bzw. Nachgiebigkeit entspricht einer Federwirkung, die in der Fig. 1 beispielhaft in zwei Raumrichtungen schematisch in Form von dargestellten FederDämpfer-Symbolen 14 und 15 in der Ebene veranschaulicht ist.

Gemäß Fig. 1 wird der Manipulatorarm 2 durch die Robotersteuerung 3 in einer aktiven Nachgiebigkeitsregelung betrieben.

In der Fig. 2 befindet sich der Manipulatorarm 2 in einer Arbeitsposition an einem Werkstück 16 mit einem beispielhaften Arbeitspunkt P1 auf dem Werkstück 16. In der Arbeitsposition des Manipulatorarms 2 kann die Hand 13 eines Benutzers nicht an den Manipulatorarm 2 herangeführt werden. Dies kann beispielsweise der Fall sein, wenn sich der Manipulatorarm 2 in einer abgeschlossenen Arbeitszelle 17 befindet oder schon allein dann, wenn ein Heranführen der Hand 13 an den Manipulatorarm 2 zwar grundsätzlich möglich wäre, aber zu gefährlich ist, um es tatsächlich zu tun. Die Steifigkeitsparameter S werden in den Figuren an dessen Bezugsbasis in Form von Vektoren dargestellt.

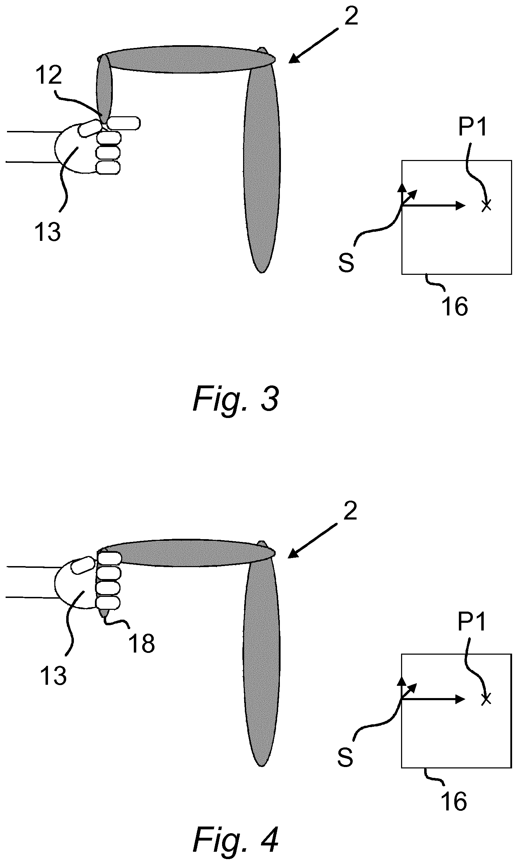

In der Fig. 3 ist nun das grundlegende erfindungsgemäße Verfahren veranschaulicht.

Der Manipulatorarm 2 wird mittels der Steuervorrichtung 3 an eine besonders gut zugängliche und für den Programmierer gut handhabbare Position, die Prüf-Pose, wie beispielshaft in den Fig. 3 bis Fig. 7 gezeigt, gefahren. Der Manipulatorarm 2 kann entweder automatisch oder manuell, d.h. handgeführt in die Prüf-Pose gebracht werden. Der Programmierer wählt nun einen Bewegungssatz des Programms an. Durch Betätigen eines Eingabemittels wird die für den ausgewählten Bewegungssatz gültige Steifigkeitsparametrierung übernommen, ohne dass der Manipulatorarm 2 sich bewegt. Der Manipulatorarm 2 bleibt also in der dargestellten Prüf-Pose. Allerdings weist der Manipulatorarm 2 in der Prüf-Pose diejenige Steifigkeit auf, welche er in der Ausführungspose (Fig. 2) gemäß dem ausgewählten Bewegungssatz des Programms dort aufweisen würde.

Nach Betätigen eines Zustimmschalters kann der Programmierer die eingestellten Steifigkeiten durch Anfassen des Manipulatorarms 2 in der Prüf-Pose überprüfen. Dabei entspricht die Einstellung der Steifigkeiten des Manipulatorarms 2 genau den Einstellungen gemäß dem ausgewählten Bewegungssatz des Programms. Der Benutzer fasst den Manipulatorarm 2 also sinnvollerweise, wie in Fig. 3 dargestellt, am Endglied 12 bzw. am Roboterflansch an, um die eingestellten Steifigkeiten durch manuelles Berühren und/oder Bewegen zu prüfen. Es kann jedoch auch ein separater Griff 18 vorgesehen sein, wie in Fig. 4 dargestellt, der mit einem der Glieder des Manipulatorarms 2, insbesondere mit dem Endglied 12 oder dem Glied 11 fest verbunden ist. Gegebenenfalls kann ein Glied des Manipulatorarms 2 auch unmittelbar als Griff 18 dienen.

Der Programmierer kann die Steifigkeitsparameter modifizieren und die Veränderungen direkt, insbesondere unmittelbar erfühlen. Nach Betätigen eines weiteren Eingabemittels, lassen sich die modifizierten Steifigkeitsparameter für den ausgewählten Bewegungssatz übernehmen.

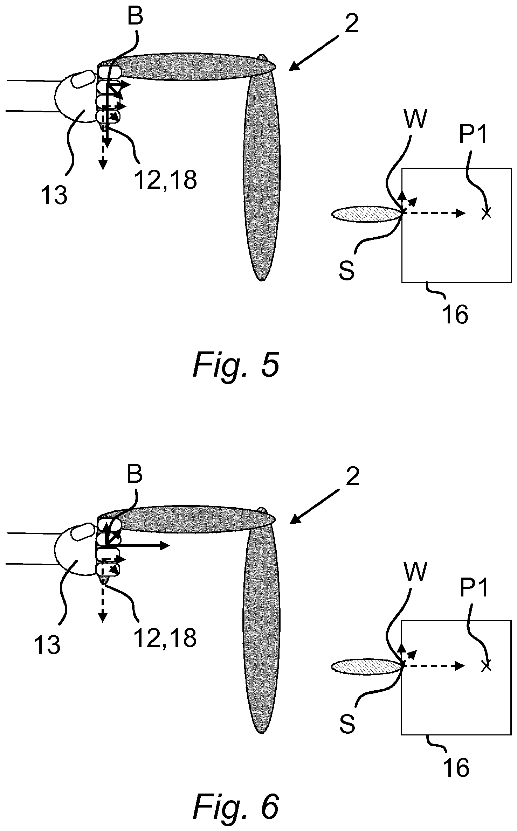

Die Fig. 5 zeigt den in der Prüf-Pose gegriffenen Manipulatorarm 2, bei dem die Bezugsbasis B der Steifigkeitsparameter S an dem zu greifenden Glied 12 oder Griff 18 des Manipulatorarms 2 in gleicher relativer Weise ausgerichtet ist, wie am Werkzeugbezugspunkt W.

Dazu erfolgt insoweit eine Transformation des Drehzentrums vom Werkzeugbezugspunkt W in das Glied 12 bzw. den Griff 18. Die Steifigkeiten, insbesondere die Rotationssteifigkeiten sind im Regelfall bezüglich des Werkzeugbezugspunktes W, beispielsweise eines Greifermittelpunkts oder Kontaktpunkts, programmiert. Um einen realistischeren haptischen Eindruck zu bekommen kann das Drehzentrum dorthin transformiert werden, wo der Programmierer sie am intuitivsten erfühlen kann.

Die Fig. 6 zeigt den in der Prüf-Pose gegriffenen Manipulatorarm 2 bei dem die Orientierung der Bezugsbasis B der Steifigkeitsparameter trotz einer anderen Ausrichtung des zu greifenden Glieds 12 bzw. des Griffes 18 des Manipulatorarms 2 als der Werkzeugbezugspunkt W, im Raum beibehalten wird.

Dazu erfolgt insoweit eine Transformation der Steifigkeitsvektoren entsprechend der programmierten Orientierung. Um einen besseren Bezug zum tatsächlich programmierten Punkt zu bekommen, können die Koordinatensysteme entsprechend transformiert werden, so dass sie bzgl. der Weltkoordinaten wieder übereinstimmen. Wenn beispielsweise in einem Programm der Roboter in z-Richtung (Werkzeug -Koordinatensystem) eine niedrige Steifigkeit aufweisen soll und aufgrund der programmierten Orientierung dies der x-Koordinate im Weltkoordinatensystem entspricht, wird bei Aktivierung dieser Option die Steifigkeit in der Prüf-Pose so parametrisiert, dass diese niedrige Steifigkeit ebenfalls in x-Richtung im Weltkoordinatensystem ausgerichtet ist, auch wenn dies nicht der z-Richtung im Werkzeug-Koordinatensystem entspricht.

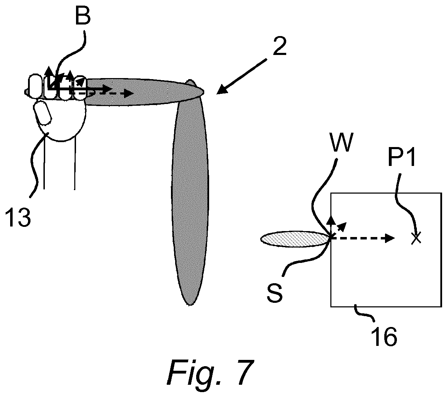

Die Fig. 7 zeigt den in der Prüf-Pose gegriffenen Manipulatorarm 2 bei dem die Orientierung der Bezugsbasis B der Steifigkeitsparameter trotz einer anderen Ausrichtung des zu greifenden Glieds 12 bzw. des Griffes 18 des Manipulatorarms 2 als der Werkzeugflansch, im Raum beibehalten wird.

Hierbei kann die Orientierung in der Prüf-Pose automatisch so geändert werden, dass sie der programmierten Orientierung entspricht. Vorteil hierbei ist ein noch realistischeres Abbild.

In allen Ausführungsvarianten können die unterschiedlichen Funktionalitäten mittels Eingabemittel 20.1, 20.2, 20.3 und 20.4 an der Robotersteuerung 3 ausgelöst werden. Dazu kann, wie in Fig.1 schematisch dargestellt, beispielsweise ein Handbediengerät 19 entsprechende Eingabemittel 20.1, 20.2, 20.3 und 20.4 aufweisen. Ein Modifizieren der Steifigkeitsparameter kann darüber hinaus beispielsweise durch einfache Plus-/Minus-Tasten 21 insbesondere für jede der sechs Koordinaten erfolgen. Die Steifigkeitsparameter werden dann um einen bestimmten einstellbaren Betrag erhöht bzw. erniedrigt.

Zum einfachen kompletten Durchlauf eines Programms (Steifigkeits-Simulationslauf) können nach Betätigen eines Eingabemittels 20.1, 20.2, 20.3, 20.4 und/oder 21 nicht nur die evtl. modifizierten Parameter übernommen werden, sondern auch gleich der nächste Bewegungssatz angewählt und die entsprechenden neuen Parameter eingestellt werden. Eines der Eingabemittel 20.1, 20.2, 20.3, 20.4 kann dadurch entfallen und der Programmierer kann das Programm schrittweise abarbeiten. Der entsprechende Satz im Programm wird angezeigt, es wird aber lediglich die programmierte Steifigkeit eingestellt, die Bewegung wird nicht ausgeführt.

Die tatsächliche Pose/Position des aktuell gefühlten Punktes kann auch visuell auf einem Monitor anhand eines virtuellen Robotermodells, insbesondere inklusive virtuellen Werkstücken, dargestellt werden bzw. mittels Augmented Reality visualisiert werden.

## Patentansprüche

1. Verfahren zum Programmieren eines Industrieroboters (1), welcher einen Manipulatorarm (2) und eine den Manipulatorarm (2) ansteuernde Steuervorrichtung (3) aufweist, die ausgebildet ist, den Manipulatorarm (2) gemäß eines in einem Programmiermodus editierbaren und in einem Ausführungsmodus ausführbaren Roboterprogramms zu bewegen, das wenigstens einen Programmbefehl enthält, dem wenigstens ein Steifigkeitsparameter und eine Pose des Manipulatorarms (2) zugeordnet ist, durch den die Steuervorrichtung (3) während eines im Ausführungsmodus automatischen Ausführens des Roboterprogramms veranlasst wird, den Manipulatorarm (2) dem wenigstens einen Steifigkeitsparameter entsprechend kraft- und/oder momentengeregelt automatisch anzusteuern, aufweisend die Schritte:
- Auswählen eines Programmbefehls, dessen zugeordneter Steifigkeitsparameter der zugeordneten Pose im Programmiermodus überprüft, geändert und/oder gespeichert werden soll,
- Bewegen des Manipulatorarms (2) in eine von der ausgewählten, zugeordneten Pose unterschiedliche Prüf-Pose, in welcher der Industrieroboter zum manuellen Berühren und/oder Bewegen des Manipulatorarms (2) eingerichtet und/oder angeordnet ist,
- Automatisches Ansteuern des Manipulatorarms (2) durch die Steuervorrichtung (3) derart, dass der Manipulatorarm (2) in der Prüf-Pose die dem zugeordneten Steifigkeitsparameter des ausgewählten Programmbefehls entsprechende Steifigkeit aufweist, die der Manipulatorarm (2) in der dem ausgewählten Programmbefehl zugeordneten Pose hätte.

2. Verfahren nach Anspruch 1, bei dem
das Bewegen des Manipulatorarms (2) in die Prüf-Pose, in welcher der Industrieroboter (1) zum manuellen Berühren und/oder Bewegen des Manipulatorarms (2) eingerichtet und/oder angeordnet ist, automatisch oder manuell erfolgt, bevor das Auswählen eines Programmbefehls, dessen zugeordneter Steifigkeitsparameter im Programmiermodus überprüft, geändert und/oder gespeichert werden soll, durchgeführt wird.

3. Verfahren nach Anspruch 1, bei dem
das Bewegen des Manipulatorarms (2) in die Prüf-Pose, in welcher der Industrieroboter (1) zum manuellen Berühren und/oder Bewegen des Manipulatorarms (2) eingerichtet und/oder angeordnet ist, automatisch oder manuell erfolgt, nachdem das Auswählen eines Programmbefehls, dessen zugeordneter Steifigkeitsparameter im Programmiermodus überprüft, geändert und/oder gespeichert werden soll, durchgeführt wurde.

4. Verfahren nach einem der Ansprüche 1 bis 3, bei dem
die Steuervorrichtung (3) oder ein mit der Steuervorrichtung (3) verbundenes Handbediengerät (19) ein erstes Eingabemittel (20.1) aufweist und das Auswählen eines Programmbefehls, dessen zugeordneter Steifigkeitsparameter im Programmiermodus überprüft, geändert und/oder gespeichert werden soll durch manuelles Betätigen des ersten Eingabemittels (20.1) erfolgt.

5. Verfahren nach einem der Ansprüche 1 bis 4, bei dem
die Steuervorrichtung (3) oder ein mit der Steuervorrichtung (3) verbundenes Handbediengerät (19) ein zweites Eingabemittel (20.2) aufweist und das automatische Ansteuern des Manipulatorarms (2) durch die Steuervorrichtung (3) derart, dass der Manipulatorarm (2) in der Prüf-Pose die dem zugeordneten Steifigkeitsparameter des ausgewählten Programmbefehls entsprechende Steifigkeit aufweist, erst dann erfolgt, wenn das zweite Eingabemittel (20.2) betätigt ist.

6. Verfahren nach einem der Ansprüche 1 bis 5, bei dem
die Steuervorrichtung (3) oder ein mit der Steuervorrichtung (3) verbundenes Handbediengerät (19) ein drittes Eingabemittel (20.3) aufweist und durch manuelles Betätigen des dritten Eingabemittels (20.3) der Steifigkeitsparameter des ausgewählten Programmbefehls verändert wird.

7. Verfahren nach Anspruch 6, bei dem
das dritte Eingabemittel (20.3) neben einem Ruhezustand wenigstens zwei Schaltzustände aufweisen kann, und durch manuelles Aktivieren des ersten Schaltzustands der Steifigkeitsparameter des ausgewählten Programmbefehls erhöht wird und durch manuelles Aktivieren des zweiten Schaltzustands der Steifigkeitsparameter des ausgewählten Programmbefehls verringert wird.

8. Verfahren nach einem der Ansprüche 1 bis 7, bei dem
die Steuervorrichtung (3) oder ein mit der Steuervorrichtung (3) verbundenes Handbediengerät (19) ein viertes Eingabemittel (20.4) aufweist und durch manuelles Betätigen des vierten Eingabemittels (20.4) die ausgewählte, eingestellte und/oder momentan durch die Steuervorrichtung (3) am Manipulatorarm (2) angesteuerte Steifigkeit als neuer Steifigkeitsparameter dem ausgewählten Programmbefehl zugeordnet gespeichert wird.

9. Verfahren nach einem der Ansprüche 1 bis 8, bei dem der wenigstens eine Steifigkeitsparameter in der Prüf-Pose an einer dem ausgewählten Programmbefehl entsprechenden Bezugsstelle des Manipulatorarms (2) eingestellt wird, an welcher Bezugsstelle des Manipulatorarms (2) die Steuervorrichtung (3) im Ausführungsmodus die Steifigkeit entsprechend des Roboterprogramms am Manipulatorarms (2) einstellen würde.

10. Verfahren nach einem der Ansprüche 1 bis 8, bei dem der wenigstens eine Steifigkeitsparameter in der Prüf-Pose an einer vom ausgewählten Programmbefehl abweichenden Bezugsstelle des Manipulatorarms (2) eingestellt wird, insbesondere an eine als Bezugsstelle vorbestimmte Greifstelle an einem der Glieder (5-12) des Manipulatorarms (2) verlegt wird.

11. Verfahren nach einem der Ansprüche 1 bis 10, bei dem dem wenigstens einen Steifigkeitsparameter ein Bezugskoordinatensystem zugeordnet ist und unter Beibehaltung der Prüf-Pose des Manipulatorarms (2) die Orientierung des Bezugskoordinatensystem geändert wird, insbesondere derart geändert wird, dass das Bezugskoordinatensystem in der Prüf-Pose eine Orientierung einnimmt, welche es bezüglich eines Weltkoordinatensystems auch während der Ausführung des ausgewählten Programmbefehls im Ausführungsmodus einnehmen würde.

12. Verfahren nach einem der Ansprüche 1 bis 10, bei dem dem wenigstens einen Steifigkeitsparameter ein Bezugskoordinatensystem zugeordnet ist und die Prüf-Pose des Manipulatorarms (2) derart automatisch verändert wird, dass die Orientierung des Bezugskoordinatensystem in der geänderten Prüf-Pose der Orientierung entspricht, welche das Bezugskoordinatensystem bezüglich eines Weltkoordinatensystems auch während der Ausführung des ausgewählten Programmbefehls im Ausführungsmodus einnehmen würde.

13. Verfahren nach einem der Ansprüche 1 bis 12, bei dem schrittweise mehrere Programmbefehle des Roboterprogramms nacheinander gemäß einem Verfahren nach einem der Ansprüche 1 bis 12 behandelt werden, insbesondere bei Betätigen eines Eingabemittels (20.1- 20.4), insbesondere bei Betätigen des vierten Eingabemittels (20.4) gemäß Anspruch 8, von einem ausgewählten Programmbefehl zum nächstfolgenden Programmbefehl im Roboterprogramms gesprungen wird.

14. Industrieroboter, aufweisend eine Steuervorrichtung (3), die ausgebildet ist, ein Roboterprogramm auszuführen, sowie aufweisend einen Manipulatorarm (2) mit wenigstens drei Gelenken (4), die gemäß des Roboterprogramms automatisiert und/oder in einem Handfahrbetrieb automatisch verstellbar sind, wobei die Steuervorrichtung (3) ausgebildet ist, ein Verfahren nach einem der Ansprüche 1 bis 13 durchzuführen.

## Claims

1. Method for programming an industrial robot (1), which comprises a manipulator arm (2) and a control device (3) for actuating the manipulator arm (2), the control device being configured to move the manipulator arm (2) according to a robot program that can be edited in a program mode and executed in an execution mode, wherein the robot program contains at least one program command to which at least one rigidity parameter and a pose of the manipulator arm (2) are assigned, by which during an automatic execution of the robot program in execution mode the control device (3) is caused to automatically actuate the manipulator arm (2) in a manner that is force and/or torque-controlled according to the at least one rigidity parameter, comprising the steps:
- selecting a program command, the assigned rigidity parameter of the assigned pose of which is to be verified, changed and/or saved in the program mode;
- moving the manipulator arm (2) into a test pose, different from the selected assigned post in which the industrial robot is configured and/or arranged for manual contact with and/or movement of the manipulator arm (2),
- automatically actuating the manipulator arm (2) by means of the control device (3) such that the manipulator arm (2) in the test pose exhibits the rigidity corresponding to the assigned rigidity parameter of the selected program command, which rigidity the manipulator arm (2) would have in the pose assigned to the selected program command.

2. Method according to claim 1, wherein the movement of the manipulator arm (2) into the test pose, in which the industrial robot (1) is configured and/or arranged for manually contacting and/or moving the manipulator arm (2), is performed automatically or manually, before a program command has been selected, for which the assigned rigidity parameter is to be verified, changed and/or saved in the program mode.

3. Method according to claim 1, wherein the movement of the manipulator arm (2) into the test pose, in which the industrial robot (1) is configured and/or arranged for manually contacting and/or moving the manipulator arm (2), is performed automatically or manually, once a program command has been selected, for which the assigned rigidity parameter is to be verified, changed and/or saved in the program mode.

4. Method according to any of claims 1 to 3, wherein the control device (3) or a manual control unit (19) connected to the control device (3) includes a first input device (20.1), and the selection of a program command, the assigned rigidity parameter of which is to be verified, changed, and/or saved in program mode, takes place by manually activating the first input device (20.1).

5. Method according to any of claims 1 to 4, wherein the control device (3) or a manual control unit (19) connected with the control device (3) has a second input device (20.2), and the automatic actuation of the manipulator arm (2) is performed by the control device (3) such that the manipulator arm (2) in the test pose has the rigidity which corresponds to the assigned rigidity parameter of the selected program command, only when the second input device (20.2) is actuated.

6. Method according to any of claims 1 to 5, wherein the control device (3) or a manual control unit (19) connected to the control device (3) includes a third input device (20.3), and the rigidity parameter of the selected program command is changed by manually operating the third input device (20.3).

7. Method according to claim 6, wherein the third input device (20.3) can have at least two switching states in addition to an idle state, and the rigidity parameter of the selected program command is increased by manually activating the first switching state, and the rigidity parameter of the selected program command is decreased by manually activating the second switching state.

8. Method according to any of claims 1 to 7, wherein the control device (3), or a manual control unit (19) connected to the control device (3), comprises a fourth input device (20.4), and the selected, set rigidity and/or the rigidity actuated by the control device (3) on the manipulator arm (2) is stored as a new rigidity parameter assigned to the selected program command by manually operating the fourth input device (20.4).

9. Method according to any of claims 1 to 8, wherein the at least one rigidity parameter in the test pose is set at a reference point of the manipulator arm (2) corresponding to the selected program command, at which reference point of the manipulator arm (2) the control device (3) in execution mode would set the rigidity corresponding to the robot program on the manipulator arm (2).

10. Method according to any of claims 1 to 8, wherein the at least one rigidity parameter in the test pose is set at a reference point of the manipulator arm (2) different from the selected program command, in particular is transferred to a gripper point predefined as a reference point on one of the links (5-12) of the manipulator arm (2).

11. Method according to any of claims 1 to 10, wherein a reference coordinate system is assigned to the at least one rigidity parameter and while maintaining the test pose of the manipulator arm (2) the orientation of the reference coordinate system is changed, in particular is changed such that the reference coordinate system in the test pose adopts an orientation which it would adopt relative to a global coordinate system even during the execution of the selected program command in execution mode.

12. Method according to any of claims 1 to 10, wherein a reference coordinate system is assigned to the at least one rigidity parameter and the test pose of the manipulator arm (2) is changed automatically such that the orientation of the reference coordinate system in the changed test pose corresponds to the orientation which the reference coordinate system would adopt relative to a global coordinate system even during the execution of the selected program command in execution mode.

13. Method according to any of claims 1 to 12, wherein step-by-step a plurality of program commands of the robot program are processed one after the other according to a method of any of claims 1 to 12, particularly when activating an input device (20.1-20.4), particularly when activating the fourth input device (20.4) according to claim 8, there is a jump from one selected program command to the next program command in the robot program.

14. Industrial robot comprising a control device (3) which is designed to execute a robot program, and comprising a manipulator arm (2) with at least three joints (4) which are automated according to the robot program and/or are automatically adjustable by manual operation, wherein the control device (3) is designed to perform a method according to any of claims 1 to 13.

## Revendications

1. Procédé de programmation d'un robot industriel (1) qui présente un bras manipulateur (2) et un dispositif de commande (3) qui pilote le bras manipulateur (2) et qui est conçu pour déplacer le bras manipulateur (2) selon un programme de robot qui peut être édité en mode de programmation et exécuté en mode d'exécution, qui contient au moins une instruction de programme à laquelle sont associés au moins un paramètre de rigidité et une pose du bras manipulateur (2), par laquelle, pendant une exécution automatique du programme de robot en mode d'exécution, le dispositif de commande (3) est amené à piloter automatiquement de manière réglée en force et/ou en couple le bras manipulateur (2) en fonction d'au moins un paramètre de rigidité, comprenant les étapes consistant à :
- sélectionner une instruction de programme, dont le paramètre de rigidité associé de la pose associée doit être vérifié, modifié et/ou mémorisé en mode de programmation,
- déplacer le bras manipulateur (2) dans une pose d'essai différente de la pose associée sélectionnée, dans laquelle le robot industriel est configuré et/ou agencé pour toucher et/ou déplacer manuellement le bras manipulateur (2),
- piloter automatiquement le bras manipulateur (2) par le dispositif de commande (3) de telle sorte que le bras manipulateur (2), dans la pose d'essai, présente la rigidité correspondant au paramètre de rigidité associé de l'instruction de programme sélectionnée, que le bras manipulateur (2) aurait dans la pose associée à l'instruction de programme sélectionnée.

2. Procédé selon la revendication 1, dans lequel
le déplacement du bras manipulateur (2) dans la pose d'essai, dans laquelle le robot industriel (1) est configuré et/ou agencé pour toucher et/ou déplacer manuellement le bras manipulateur (2), est exécuté automatiquement ou manuellement, avant que la sélection d'une instruction de programme, dont le paramètre de rigidité associé doit être vérifié, modifié et/ou mémorisé en mode de programmation, soit effectuée.

3. Procédé selon la revendication 1, dans lequel
le déplacement du bras manipulateur (2) dans la pose d'essai, dans laquelle le robot industriel (1) est configuré et/ou agencé pour toucher et/ou déplacer manuellement le bras manipulateur (2), est exécuté automatiquement ou manuellement après que la sélection d'une instruction de programme, dont le paramètre de rigidité associé doit être vérifié, modifié et/ou mémorisé en mode de programmation, ait été effectuée.

4. Procédé selon l'une des revendications 1 à 3, dans lequel
le dispositif de commande (3) ou un appareil de commande manuelle (19) relié au dispositif de commande (3) présente un premier moyen d'entrée (20.1), et la sélection d'une instruction de programme, dont le paramètres de rigidité associé doit être vérifié, modifié et/ou mémorisé en mode de programmation, est effectuée par actionnement manuel du premier moyen d'entrée (20.1).

5. Procédé selon l'une des revendications 1 à 4, dans lequel
le dispositif de commande (3) ou un appareil de commande manuel (19) relié au dispositif de commande (3) présente un deuxième moyen d'entrée (20.2), et le pilotage automatique du bras manipulateur (2) par le dispositif de commande (3), de telle sorte que dans la pose d'essai, le bras manipulateur (2) présente la rigidité correspondant au paramètre de rigidité associé de l'instruction de programme sélectionnée, n'est effectué que lorsque le deuxième moyen d'entrée (20.2) est actionné.

6. Procédé selon l'une quelconque des revendications 1 à 5, dans lequel
le dispositif de commande (3) ou un appareil de commande manuelle (19) relié au dispositif de commande (3) présente un troisième moyen d'entrée (20.3), et le paramètre de rigidité de l'instruction du programme sélectionnée est modifié par actionnement manuel du troisième moyen d'entrée (20.3).

7. Procédé selon la revendication 6, dans lequel
le troisième moyen d'entrée (20.3) peut avoir au moins deux états de commutation en plus d'un état de repos, et par activation manuelle du premier état de commutation, le paramètre de rigidité de l'instruction de programme sélectionnée est augmenté, et par activation manuelle du deuxième état de commutation, le paramètre de rigidité de l'instruction de programme sélectionnée est réduit.

8. Procédé selon l'une des revendications 1 à 7, dans lequel
le dispositif de commande (3) ou un appareil de commande manuelle (19) relié au dispositif de commande (3) présente un quatrième moyen d'entrée (20.4) et, par actionnement manuel du quatrième moyen d'entrée (20.4), la rigidité sélectionnée, qui est réglée et/ou pilotée momentanément par le dispositif de commande (3) sur le bras manipulateur (2), est mémorisée comme nouveau paramètre de rigidité associé à l'instruction de programme sélectionnée.

9. Procédé selon l'une des revendications 1 à 8, dans lequel
ledit au moins un paramètre de rigidité est réglé, dans la pose d'essai ,en un point de référence du bras manipulateur (2) qui correspond à l'instruction de programme sélectionnée, point de référence du bras manipulateur (2) auquel le dispositif de commande (3) réglerait, en mode d'exécution, la rigidité sur le bras manipulateur (2) selon le programme de robot.

10. Procédé selon l'une des revendications 1 à 8, dans lequel
ledit au moins un paramètre de rigidité est réglé, dans la pose d'essai, en un point de référence du bras manipulateur (2) qui s'écarte de l'instruction de programme sélectionnée et est transféré en particulier en un point de préhension prédéterminé comme point de référence sur un des éléments (5-12) du bras manipulateur (2).

11. Procédé selon l'une des revendications 1 à 10, dans lequel
un système de coordonnées de référence est associé audit moins un paramètre de rigidité, et tout en maintenant la pose d'essai du bras manipulateur (2), l'orientation du système de coordonnées de référence est modifiée, en particulier modifiée de telle sorte que le système de coordonnées de référence prend, dans la pose d'essai, une orientation qu'il prendrait par rapport à un système de coordonnées mondiales également pendant l'exécution de l'instruction de programme sélectionnée en mode d'exécution.

12. Procédé selon l'une quelconque des revendications 1 à 10 dans lequel
un système de coordonnées de référence est associé audit au moins un paramètre de rigidité, et la pose d'essai du bras manipulateur (2) est modifiée automatiquement de telle sorte que l'orientation du système de coordonnées de référence, dans la pose d'essai modifiée, correspond à l'orientation que le système de coordonnées de référence prendrait par rapport à un système de coordonnées mondiales également pendant l'exécution de l'instruction de programme sélectionnée en mode d'exécution.

13. Procédé selon l'une des revendications 1 à 12, dans lequel
plusieurs instructions de programme du programme de robot sont successivement traitées pas à pas selon un procédé selon l'une des revendications 1 à 12, en particulier lorsqu'un moyen d'entrée (20.1 - 20.4) est actionné, en particulier lorsque le quatrième moyen d'entrée (20.4) selon la revendication 8 est actionné, un saut est effectué d'une instruction de programme sélectionnée à l'instruction de programme suivante dans le programme de robot.

14. Robot industriel présentant un dispositif de commande (3) destiné à exécuter un programme de robot et présentant un bras manipulateur (2) avec au moins trois articulations (4) qui sont automatisées et/ou ajustables automatiquement dans un mode de déplacement manuel, selon le programme de robot, le dispositif de commande (3) étant réalisé pour exécuter un procédé selon l'une des revendications 1 à 13.
